# EUROPÄISCHE PATENTSCHRIFT

(11) **EP 0 412 260 B1**
(45) Veröffentlichungstag und Bekanntmachung des Hinweises auf die Patenterteilung: **21.09.1994**
(21) Anmeldenummer: 90111646.7
(22) Anmeldetag: 20.06.1990
(51) Int. Cl.: H04N 5/60

(54) **Audiowiedergabeeinrichtung mit frequenzselektiven Verstärkern zur Ansteuerung geräteinterner und externer Lautsprecher**
Audio reproduction apparatus with frequency-selective amplification for driving loudspeakers internal and external to the set
Dispositif de réproduction audio avec amplification sélective sur la fréquence pour l'entraînement des haut-parleurs internes et externes à l'appareil

(30) Priorität: 11.08.1989 DE 3926535
(43) Veröffentlichungstag der Anmeldung: 13.02.1991
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Hähner, Michael, Grundig E.M.V, Kurgartenstrasse 37, D-8510 Fürth/Bay (DE)

(56) Entgegenhaltungen:
- DE-A- 2 806 580
- PATENT ABSTRACTS OF JAPAN vol. 10, no. 145 (E-407)(2202) 28 Mai 1986, & JP-A-61 007796 (MATSUSHITA DENKI SANGYO K.K.) 14 Januar 1986
- FUNKSCHAU. no. 22, 1981, MUNCHEN DE Seiten 60 - 63; U. Radke: "Mit Stereoton"

## Beschreibung

Mit der Einführung des Stereotones in der Fernsehempfangstechnik ergab sich auf der Empfängerseite das Problem, daß bei den von der Bildröhre bestimmten Gehäuseabmessungen des Fernsehgerätes keine ausreichende Basis für die Abstrahlung des Stereotones gegeben ist. Bekanntlich entsteht für den Hörer erst ein optimaler Stereoeindruck, wenn die Basisbreite, d.h. der Abstand zwischen den beiden Lautsprecherboxen für den linken und rechten Kanal und der Hörabstand etwa gleich groß sind. Da aber der mittlere Betrachtungsabstand zum Fernsehgerät bei den meistverwendeten Bildschirmgrößen 3 bis 4 m beträgt, kann die Stereotonabstrahlung über im Fernsehgerät integrierte Lautsprecher nur einen Kompromiß zugunsten einer kompakten Bauweise darstellen.

Ähnlich ungünstige Bedingungen für die Abstrahlung des Stereotones ergeben sich auch bei transportablen Audiogeräten, z.B. Radiorecorder, sofern ihre Lautsprecher nicht abnehmbar und getrennt aufstellbar sind.

Wie dem Aufsatz "Mit Stereoton" in der Zeitschrift "Funkschau", Heft 22/1981, Seiten 60-63 zu entnehmen ist, wurden deshalb bei Markteinführung der Stereoton-Fernsehgeräte neben der Lösung mit integrierten Stereolautsprechern oder eingebauten Passiv-Lautsprecherboxen folgende Systeme der stereofonen Schallübertragung angeboten:
1) Fernsehgerät mit integriertem Mono-Lautsprecher und Buchse oder Adapter zum hochohmigen Anschluß an eine stereofone HiFi-Audioanlage,
2) Fernsehgerät mit eingebautem Stereoendverstärker ohne integrierte Lautsprecher, aber mit beistellbaren Passiv-Lautsprecherboxen,
3) Fernsehgerät mit eingebautem Mono-Lautsprecher und extern anschließbarer Aktivbox, die einen Stereoverstärker beinhaltet, mit dem eine weitere Passiv-Lautsprecherbox betrieben wird, und
4) Fernsehgerät, aufgeteilt in Funktionsblöcke, mit extern betreibbaren Mehrwege-Aktiv-Lautsprecherboxen, bestehend aus Einzelbausteinen für Hoch-, Mittel- und Tiefton mit jeweils eigenem Endverstärker.

Der "Funkschau"-Artikel Seite 58 in der Ausgabe 2/1984 erwähnt als zusätzliche Lösungsmöglichkeit den Unterbau einer Doppel-Lautsprecherbox unter dem Fernsehgerät, weist aber auf den Mangel der Stereowirksamkeit bereits hin.

In der DE-A- 28 06 580 wird als Möglichkeit, die Stereobasis bei einem Fernsehgerät zu erweitern, der Anschluß externer Lautsprecherboxen genannt, wobei auf Wunsch die geräteinternen Lautsprecher durch Einführen der Stecker der Lautsprecherkabel in die zugehörigen Buchsen abgeschaltet werden können.

Den vorgenannten Gerätekonstruktionen liegt jedoch als kennzeichnendes Merkmal zugrunde, daß die eingebauten Lautsprecher oder Lautsprecherboxen über jeweils nur einen Endverstärker pro Kanal mit eventuell nachgeschalteten passiven Lautsprecherweichen betrieben werden, d.h., die Endverstärker liefern ein breitbandiges Signal, das auch für das Betreiben extern angeschlossener Lautsprecherboxen geeignet ist. Diese Art der Tonübertragung ist jedoch mit elektroakustischen Mängeln behaftet, weshalb in der HiFi-Audiotechnik seit langem sogenannte Aktiv-Lautsprecherboxen eingesetzt werden, die zugeordnet zu den Hoch-, Mittel- und Tieftonlautsprechern frequenzselektive Verstärker besitzen. Unter anderem sind im Sonderheft "High Fidelity Funkschau Spezial" vom August 1978 die Vorteile für die Auslegung der Frequenzweichen und der Verstärker beschrieben, die sich aus der aktiven Bauweise gegenüber herkömmlichen Passiv-Lautsprecherboxen ergeben.

Nachdem bei Fernsehgeräten zunächst die Optimierung der Bildqualität im Vordergrund stand, hat mit Einführung des Stereotones die Qualität der Tonübertragung in den letzten Jahren erheblich an Bedeutung gewonnen. So gehört es heute zum Stand der Technik, daß Fernsehempfänger der gehobenen Klasse zur Abstrahlung eines ausgeglichenen Audiofrequenzganges mit integrierten Mehrwege-Lautsprecherboxen, zum Teil in Form von Aktivenboxen, ausgerüstet werden.

Will man aber bei Geräten mit integrierten Aktivboxen zur Verbreiterung der Stereobasis externe Lautsprecherboxen anschließen, so ist nach dem bisher bekannten Stand der Technik die Verwendung externer Aktiv-Lautsprecherboxen notwendig, die hochohmig vom Empfangsgerät angesteuert werden.

Aufgabe der vorliegenden Erfindung ist es deshalb, eine Audiowiedergabeeinrichtung mit geräteinternen frequenzselektiven Verstärkerzweigen, insbesondere für Fernsehempfangsgeräte, derart zu gestalten, daß bei Anschluß externer passiver Lautsprecherboxen von den eingebauten Endverstärkern ein breitbandiges Tonsignal geliefert wird. Mit einem manuell bedienbaren Mehrfachschalter oder mit Hilfe von Schaltbuchsen sollen die frequenzselektive Wirkung des Hoch- oder Tiefpaßfilters der die beiden Stereokanäle treibenden Verstärker aufgehoben und die internen Lautsprecher wahlweise abgeschaltet oder die nicht benutzten Verstärker stummgeschaltet werden.

In einer vorteilhaften Ausgestaltung der Erfindung sollen das Hoch- und das Tiefpaßfilter als steckbare Module ausgeführt werden, um das Geräte-Grundchassis an die elektroakustischen Eigenschaften der unterschiedlichen Gehäusevarianten leicht anpassen zu können.

Die Erfindung wird im folgenden anhand der Zeichnungen näher erläutert.

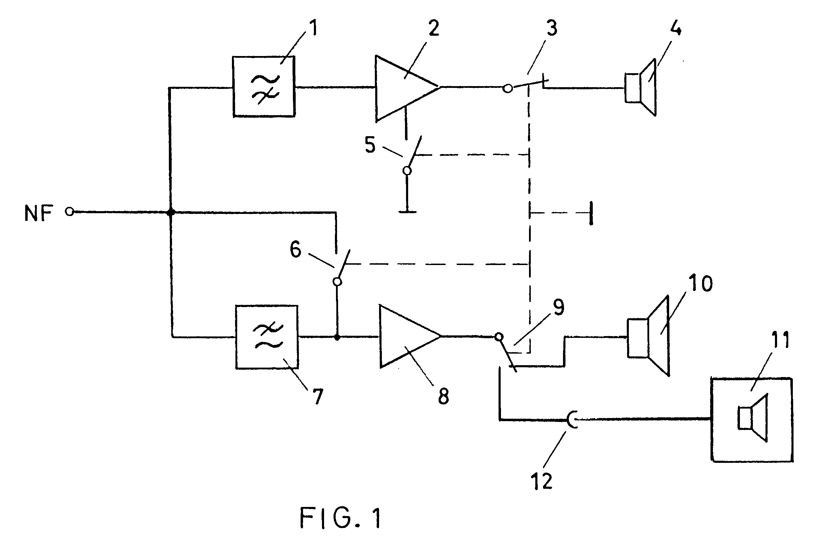

Fig. 1 zeigt als Blockschaltbild ein Beispiel der in Anspruch 1 offenbarten Audiowiedergabeeinrichtung mit einem manuell bedienbaren Mehrfachschalter, wobei für die Stereoübertragung nur ein Kanal dargestellt ist.

Das aus dem Demodulator und Stereodecoder gewonnene NF-Signal gelangt einerseits über den Hochpaß 1, den Mittel-/Hochtonverstärker 2 und den Schalter 3 zum Mittel-/Hochtonlautsprecher 4. Statt des Schalters 3, der im betätigten Zustand den Signalweg unterbricht, kann auch ein Stummschalter 5 vorgesehen werden, der im aktivierten Zustand den Verstärker 2 außer Funktion setzt.

Ein zweiter paralleler Weg führt das NF-Signal über den Tiefpaß 7, den Tieftonverstärker 8 und den Umschalter 9 zum Tieftonlautsprecher 10. Da der Tieftonverstärker 8 im Vergleich zum Mittel-/Hochtonverstärker 2 die größere Leistung aufzubringen hat, eignet er sich vorzugsweise dazu, einen externen Breitbandlautsprecher zu betreiben. Zu diesem Zweck muß das Tiefpaßfilter 7 mit dem Schalter 6 überbrückt und der Ausgang des Verstärkers 8 über den Umschalter 9 auf die Ausgangsbuchse 12 umgeschaltet werden. In Fällen, in denen für die Stereotonwiedergabe nur getrennte Mittel-/Hochtonverstärker zur Verfügung stehen, weil z.B. die Tieftonübertragung für beide Kanäle gemeinsam über einen Verstärker und Lautsprecher erfolgt, muß der Mittel-/Hochtonverstärker 2 für die Breitbandverstärker benutzt und der Hochpaß 1 überbrückt werden. In diesem Fall liegt der Umschalter 9 im Mittel-/Hochtonverstärkerzweig und der Tieftonverstärker 8 wird stummgeschaltet.

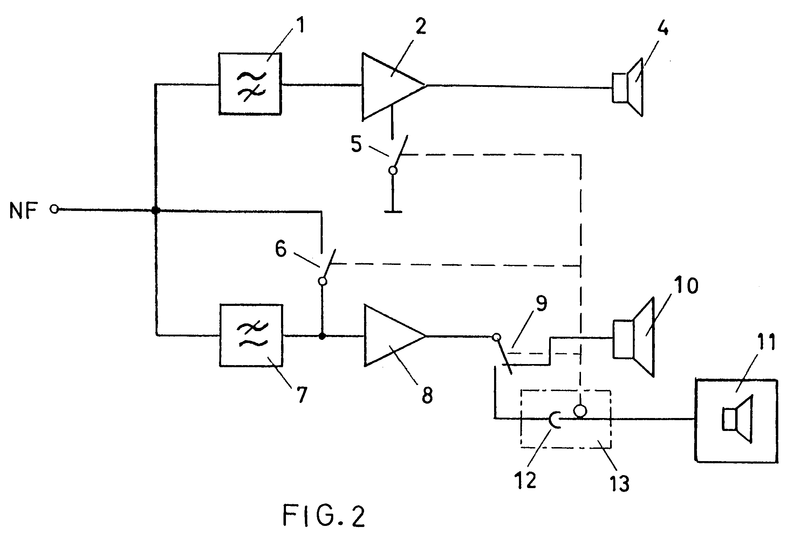

Fig. 2 zeigt schematisch die im Anspruch 1 alternativ beschriebene Ausführung der Audiowiedergabeeinrichtung mit einer Schaltbuchse 13, deren Fühler den Umschalter am Ausgang des Tieftonverstärkers 8, den Schalter 6 zur Überbrückung des Tiefpaßfilters 7 und den Stummschalter 5 zum Inaktivieren des Mittel-/Hochtonverstärkers 2 betätigt. Die mechanischen Schalter können selbstverständlich auch durch elektronische Schalter ersetzt werden, die, ausgelöst über den Fühler in der Schaltbuchse 13, mit einem High-/Low-Signal angesteuert werden.

Vorzugsweise für Geräte mit gemeinsamem Tieftonübertragungsweg für beide Stereokanäle kann auch eine Kombination aus Buchsenschalter und einem zusätzlich von Hand zu betätigenden Mehrfachschalter vorgesehen werden. Dabei wird nur der Ausgang des Mittel-/Hochtonverstärkers mit Hilfe einer Schaltbuchse beim Einführen des Anschlußsteckers automatisch auf den externen Lautsprecher umgeschaltet. Der zusätzlich manuell zu betätigende Mehrfachschalter erlaubt zwei Betriebsarten: Entweder werden extern Breitbandlautsprecher angeschlossen und dazu das Hochpaßfilter überbrückt und der Tieftonverstärker stummgeschaltet, oder es werden extern Mittel-/Hochtonlautsprecher verwendet, die frequenzselektiv über den internen Mittel-/Hochtonverstärker angesteuert werden, und der interne Tieftonübertragungsweg bleibt in Funktion.

Insbesondere bei Fernsehempfangsgeräten wird das gleiche Grundchassis in Verbindung mit verschiedenen Gehäusekonstruktionen verwendet. Um eine einfache Anpassungsmöglichkeit an die jeweils verwendeten Lautsprecher zu haben, werden das Hochpaß- und das Tiefpaßfilter vorzugsweise als steckbare Module ausgeführt, die dann individuell den einzelnen Gerätevarianten zugeordnet werden können.

## Patentansprüche

1. Audiowiedergabeeinrichtung, insbesondere für Fernsehempfänger, mit geräteinternen Teilbereichslautsprechern (4, 10), die über einen Mittel-/Hochtonzweig mit einem Hochpaßfilter (1) und einem Verstärker (2) beziehungsweise über einen Tieftonzweig mit einem Tiefpaßfilter (7) und einem Verstärker (8) betrieben werden, (2, 8) und mit einer Buchse (12), die das Anschließen einer externen Audiowiedergabeeinrichtung (11) zwischen dem Verstärker und dem Teilbereichslautsprecher einer dieser Zweige ermöglicht,
**gekennzeichnet**,
durch die Kombination folgender Merkmale:
a) anstelle der geräteinternen frequenzselektiv angesteuerten Teilbereichslautsprecher (4, 10) ist über die Buchse (12) eine breitbandige Passiv-Lautsprecherbox (11) als externe Audiowiedergabeeinrichtung anschließbar,
b) zum Betreiben der externen Passiv-Lautsprecherbox (11) wird der Zweig, an dem sich die Buchse (12) befindet, durch Überbrücken des Hochpaßfilters (1) beziehungsweise des Tiefpaßfilters (7) auf breitbandiges Übertragungsverhalten umgeschaltet,
c) das Umschalten der frequenzbestimmenden Glieder (1, 7) der Verstärker (2, 8) und der zu betreibenden Lautsprecher (4, 10, 11) erfolgt mit Hilfe eines manuell bedienbaren Mehrfachschalters (3, 5, 6, 9) und/oder automatisch mit Hilfe der Buchse (12, 13), die eine Schaltungsanordnung (5, 6, 9) enthält, beim Anschließen des Außenlautsprechers.

2. Audiowiedergabeeinrichtung nach Anspruch 1, **dadurch gekennzeichnet, daß** das Hochpaßfilter (1) und das Tiefpaßfilter (7) als steckbare Module zur einfachen Anpassung des Geräte-Grundchassis an elektroakustisch unterschiedliche Gerätevarianten ausgeführt sind.

## Claims

1. Audio reproduction device, particularly for television receivers, having internal part-range loudspeakers (4, 10) which are operated via a medium-/high-frequency branch with a high-pass filter (1) and an amplifier (2) and, respectively, via a low-frequency branch with a low-pass filter (7) and an amplifier (8), and with a socket (12) which provides for the connection of an external audio reproduction device (11) between the amplifier and the part-range loudspeaker of one of these branches, characterized by the combination of the following features:
a) instead of the internal frequency-selectively driven part-range loudspeakers (4, 10), a wide band passive loudspeaker enclosure (11) can be connected as external audio reproduction device via the socket (12),
b) to operate the external passive loudspeaker enclosure (11), the branch at which the socket (12) is located is switched to a wide band transmission characteristic by bypassing the high-pass filter (1) or, respectively, the low-pass filter (7),
c) switching of the frequency-determining elements (1, 7) of the amplifiers (2, 8) and of the loudspeakers (4, 10, 11) to be operated takes place with the aid of a manually operated multiple switch (3, 5, 6, 9) and/or automatically with the aid of the socket (12, 13) which contains a circuit arrangement (5, 6, 9), when the external loudspeaker is connected.

2. Audio reproduction device according to Claim 1, characterized in that the high-pass filter (1) and the low-pass filter (7) are constructed as plug-in modules for the simple adaptation of the basic set chassis to electroacoustically different set variants.

## Revendications

1. Dispositif de reproduction audio, notamment pour des récepteurs télévision, comportant des hauts-parleurs de zones partielles (4,10), situés à l'intérieur de l'appareil et qui fonctionnent par l'intermédiaire d'une branche à signaux à fréquence moyennes/fréquences élevées comportant un filtre passe-haut (1) et un amplificateur (2) ou par l'intermédiaire d'une branche à basses fréquences comportant un filtre passe-bas (7) et un amplificateur (8), et une douille (12), qui permet le raccordement d'un dispositif extérieur de reproduction audio (11) entre l'amplificateur et le haut-parleur de gamme partielle de l'une de ses branches,
caractérisé par la combinaison des caractéristiques suivantes:
a) à la place des hauts-parleurs de gammes partielles (4, 10) qui sont situés à l'intérieur de l'appareil et sont commandés d'une manière sélective en fréquence, un baffle de haut-parleur passif à large bande (11) peut être raccordé, par l'intermédiaire de la douille (12), en tant que dispositif extérieur de reproduction audio,
b) pour le fonctionnement du baffle de haut-parleur passif extérieur (11), la branche, à laquelle est raccordée la douille (12), est commutée sur le comportement de transmission à large bande, par shuntage du filtre passe-haut (1) ou du filtre passe-bas (7),
c) la commutation des circuits (1,7), qui déterminent la fréquence, des amplificateurs (2,8) et des hauts-parleurs (4,10,11) qui doivent fonctionner, s'effectue à l'aide d'un commutateur multiple (3,5,6,9) pouvant être actionné manuellement et/ou automatiquement à l'aide de la douille (12,13), qui contient un montage (5,6,9), lors du raccordement du haut-parleur extérieur.

2. Dispositif de reproduction audio selon la revendication 1, caractérisé en ce que le filtre passe-haut (1) et le filtre passe-bas (7) sont réalisés sous la forme de modules enfichables permettant un adaptation simple du châssis de base de l'appareil à des variantes d'appareils, qui sont différentes du point de vue électroacoustique.
